# EUROPEAN PATENT SPECIFICATION

(11) **EP 0 645 584 B1**
(45) Date of publication and mention of the grant of the patent: **22.07.1998**
(21) Application number: 94908506.2
(22) Date of filing: 08.03.1994
(51) Int. Cl.: F23G 5/00, F23G 5/10, F23G 5/44, F23G 5/50, F23C 11/00, F23J 15/00, F27B 3/08, F27B 3/28, F27D 17/00, F27D 21/00, C03B 5/00, C03B 5/02, C03B 5/26, B09B 3/00

(54) **Method of operating a plasma furnace**
Verfahren zum Betrieb eines Plasmaschmelzofens
Méthode d'exploitation d'un four à plasma

(30) Priority: 08.03.1993 JP 75199/93; 08.03.1993 JP 75200/93; 11.03.1993 JP 78757/93; 12.04.1993 JP 109919/93; 12.04.1993 JP 109920/93; 23.04.1993 JP 120790/93; 18.05.1993 JP 31300/93 U
(43) Date of publication of application: 29.03.1995
(60) Divisional application: 96116254.2
(73) Proprietor: KABUSHIKI KAISHA KOBE SEIKO SHO, Kobe-Shi, Hyogo 651 (JP); KANSAI DENRYOKU KABUSHIKI KAISHA, Osaka-shi, Osaka 530 (JP)
(72) Inventor: SUZUKI, Tomio, Kobe Corp. Research Laboratories in, 1-chome, Nishi-ku Kobe-shi, Hyogo 651-22 (JP); HIGASHI, Yasuo, Kobe Corp.Research Laboratories in, 1-chome, Nishi-ku Kobe-shi, Hyogo 651-22 (JP); YAMADA, Motoo, Corp. Techn. Research Laboratories, Amagasaki-shi Hyogo (JP); YAMADA, Motoo, C. Tech. Res. Lab. in Kansai K. K., Amagasaki-shi, Hyogo 661 (JP)
(74) Representative: Tiedtke, Harro, Dipl.-Ing.
(86) International application number: JP9400362
(87) International publication number: WO9420791

(56) References cited:
- EP-A- 0 509 250
- DE-A- 3 841 918
- JP-A- 3 055 411
- JP-A- 4 309 833
- JP-A-50 044 105
- JP-A-62 087 707
- JP-A-63 315 819
- US-A- 2 286 323

## Description

The present invention relates to a method of operating a plasma furnace according to the preamble of claim 1.

In such a plasma furnace waste such as municipal refuse, shredded and compressed jalopies, sludge or the incineration residue of these kinds of waste is melted by a plasma arc struck from a plasma torch and converted into slag.

In particular the invention concerns itself with the art of melting the slag efficiently, allowing it to be discharged from the furnace at a constant rate, and keeping waste gas as clean as possible.

In recent years, environmental conservation and the recycling of resources are becoming the objects of public attention. Especially, municipal refuse and industrial waste are showing a yearly increase in quantity to such an extent that, within and outside large cities, it is becoming difficult to find out a new site to be filled up with these kinds of waste in a raw state. Therefore, it is common to incinerate these kinds of waste and reduce the volume thereof before taking them to a site to be filled up therewith.

However, there are many cases where municipal refuse and industrial waste contain metals and various kinds of harmful matter, which remain in the ashes and incombustibles (hereinafter called the "incineration residue") after incineration. Underground water will be polluted if a site is filled up with such incineration residue. Another trouble is that, since incineration residue has low specific gravity, an open pit to be filled up therewith must have a large capacity. Furthermore, soft ground results from incineration residue with which a site is filled up, and this soft ground hardly has utility value.

A previously proposed arrangement for eliminating these various difficulties is characterized in melting the incineration residue by a plasma arc and then cool it for solidification. Heavy metals such as chromium are sealed in the solidified slag and prevented from penetration therethrough outwardly thereof. Therefore, underground water is not polluted when a site is filled up with such slag. It will not only turn out to be a contribution to the recycling of resources to use this slag as aggregate to be mixed with concrete or as material for roadbed, but also relieve those skilled in the art of their anxiety about finding out a new site to be filled up with this slag.

For example, JP-A-3-55411 describes a plasma furnace for melting the incineration residue by a plasma arc. This plasma furnace includes a furnace body having a chamber for allowing molten slag to stay. The chamber is provided with an incineration residue inlet and a slag outlet. This plasma furnace further includes a plasma torch for striking a plasma arc. In operation, the incineration residue is fed through the incineration residue inlet and melted by the plasma arc. Molten slag is allowed to stay in the chamber of the furnace body, except that a portion of the molten slag is allowed to continuously leave the chamber through the slag outlet so as to be cooled and solidified. In case of an ordinary furnace designed for use in melting metals, it is most common to dispose a plasma torch at the center of the cylindrical furnace. In case of a plasma furnace described in GB-B-1,390,351/3, the plasma torch is swung about its pivot disposed at the center of the furnace. In case of a plasma furnace described on pages 170 and 171 of the Research Paper Vol. 41, No. 2, 1985 published by Tohoku University Dressing and Smelting Laboratory, the plasma torch remains tilted while it revolves round the center of the furnace so that a large area within the furnace designed for use in the direct reduction of chromite ores may be uniformly heated.

Incineration residue to be melted in a plasma furnace of the kind indicated above has a grain size of several microns at the most. Dispersion of pulverulent incineration residue into ambient air is apt to occur when such incineration residue is being fed to the furnace or is about to be melted in the furnace. In order to confine any such dispersion, it is most common to place the incineration residue under the influence of negative pressure caused by an induced draft fan in the direction of flow of the incineration residue through the furnace.

Waste gas discharged from a plasma furnace has a temperature approximating 1300° C. Therefore, a flue to be passed by this waste gas is lined with refractory material. After passage through this flue, the waste gas is quenched in a cooler such as a water spray cooling chamber, allowed to pass through a dust catcher, and discharged into the open air. There are some cases where a heat exchanger is connected to the flue for the recovery of waste heat.

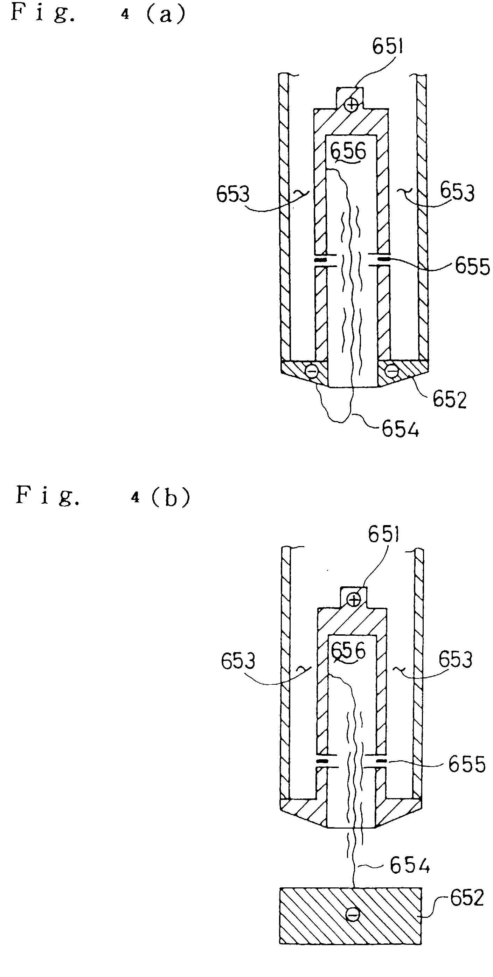

Figs. 4(a) and 4(b) are sectional views to help explain the structural construction of plasma torches generally used in plasma furnaces of the kind indicated above. Each of these plasma torches comprises an anode 651, a cathode 652, a water jacket 653 and a plasma gas inlet 655. These plasma torches are intended for two modes of operation respectively, the difference therebetween being derived from the difference in where the cathode is disposed. One of the two modes of operation, i.e. the nontransfer mode, is shown in Fig. 4(a), in which a plasma arc 654 is struck between the anode 651 disposed in the plasma torch and the cathode 652 disposed on the lower end of the plasma torch. The other of the two modes of operation, i.e. the transfer mode, is shown in Fig. 4(b), in which the plasma arc 654 is struck between the anode 651 disposed in the plasma torch and the cathode 652 disposed on a furnace body. A plasma gas supply pipe (not shown) is connected to the plasma gas inlet 655.

In case of the former mode of operation, the plasma arc is struck between two portions of the plasma torch. In case of the latter mode of operation, two portions between which the plasma arc is struck are disposed on the furnace body and the plasma torch respectively. Plasma is an ionized gas having a temperature ranging from 3,000 to 10,000 K. This temperature is high enough to cause damage to the plasma torch. The severest damage is done to the above-mentioned two portions, while the second severest damage is done to a portion of the plasma torch disposed medially of these two portions. Therefore, the provision of the water jacket 653 results from priority given to the anode 651 and its vicinity in providing a means for preventing the plasma torch from sustaining damage caused by an intense heat.

A plasma arc having a temperature up to 10,000 K facilitates the decomposition of harmful matter such as dioxine. A small-sized waste-gas purifying plant meets the need of a plasma furnace, because the amount of waste gas discharged from the plasma furnace is less than one-thirtieth of the amount of waste gas discharged from a combustion furnace.

However, each of the prior art plasma furnaces has the disadvantages that, when it is used for melting the waste, the slag outlet is apt to be choked up, that a portion of the waste is discharged through the slag outlet in an unmelted state, and that waste gas discharged from the prior art plasma furnace contains nitrogen oxides (NOₓ) and heavy metals. These disadvantages pose the following problems:

Since a plasma arc has a high temperature, a large amount of NOₓ is produced. Especially when air is used as plasma gas, the concentration of NOₓ amounts to thousands of ppm.

In order to decrease the amount of NOₓ, JP-A-2-122 109 showing a generic method of operating a plasma furnace proposes to add carbonaceous matter such as coke, coal, charcoal, combustible refuse and sludge to the incineration residue and then to melt a mixture of the carbonaceous matter and the incineration residue at a high temperature and in a reducing atmosphere in a plasma furnace.

It is necessary to keep the furnace atmosphere constantly reducing in order to decrease the amount of NOₓ by the above-mentioned method. A large quantity of carbonaceous matter is required for keeping the furnace atmosphere constantly reducing. Coke, coal and charcoal are amorphous solids, some of which are heated, melted and gasified after coming into contact with molten slag, while others are gasified as soon as they are dropped into the furnace. Such a difference in the rate of gasification makes it difficult to stabilize the quantity of the reducing gas to be produced per unit time. This is the very reason why a large quantity of carbonaceous matter is required for keeping the furnace atmosphere constantly reducing.

The provision of a means for feeding the amorphous solids to the furnace will result in high installation costs, and yet it will be difficult to subject the feed of amorphous solids to quantitative regulation. Furthermore, it is difficult to put the furnace in a sealed condition, because a gap is apt to be left between the furnace body and a movable plasma torch. Reducing gas such as carbon monoxide (CO) will leak through this gap and jeopardize the workers.

In brief, there is no teaching in the prior art that the aforesaid problems can be solved somehow or other. This is the very reason why, at the present time, there is no effective commercial plasma furnace available for converting the waste into slag.

It is an object of the present invention to further develop a method of operating a plasma furnace according to the preamble of claim 1 such that the amount of NOₓ is reduced.

According to the invention, this object is achieved by the features of claim 1.

Advantageous further developments are set out in the dependent claims.

According to the invention, a means for fuel injection against the waste gas in the furnace body. Preferably, fuel injection is carried out either in a waste gas outlet or in an outlet allotted for discharging both the slag and the waste gas. In the position where fuel injection is carried out, the waste gas is preferably held at a temperature above 500 ° C. Preferably, the amount of fuel is changed in response to the variation of the amount of plasma gas. Gaseous fuel such as city gas or butane is the most suitable fuel. Highly combustible liquid fuel such as kerosene or fuel oil A is just as good. A small amount of dust fuel may be mixed therewith, if only the mixture is capable of being injected.

The invention contemplates also the provision of a means for injecting combustion air at the downstream side of the above-described means for fuel injection. In the position where combustion air is injected, the waste gas is preferably held at a temperature above 800 ° C.

Waste gas containing a large quantitly of NOₓ is discharged either through the waste gas outlet or through the outlet allotted for discharging both the slag and the waste gas. When city gas containing CO is injected into this outlet, reducing gases, i.e. CO and H_{2,} burn in the outlet and NOₓ is reduced. Fuel is ignited and converted into reducing gases if the waste gas is held at a temperature above 500° C in the position where fuel injection is carried out.

At the downstream side of the portion where NOₓ is reduced, combustion air is injected toward the waste gas so as to subject the reducing gases such as CO and H₂ to complete combustion and inhibit them from being discharged into the open air. The concentration of CO in the waste gas discharged into the open air is held down below 100 ppm if the waste gas is held at a temperature above 800 ° C in the area where combustion air is injected.

Fig. 1 is a schematic illustration to help explain a method of operating the plasma furnace with a view to decreasing the amount of NOₓ.

Fig. 2(a) illustrates the relationship between the amount of fuel injected toward the waste gas and the concentration of CO resulting therefrom.

Fig. 2(b) illstrates the relationship between the amount of fuel injected toward the waste gas and the rate of decrease of NOₓ.

Fig. 3 is a schematic illustration to help explain another method of operating the plasma furnace with a view to decreasing the amount of NOₓ.

Figs. 4(a) and 4(b) are sectional views illustrating the main parts of two types of conventional plasma torches, respectively.

The following description explains preferred embodiments of the invention with reference to the drawings.

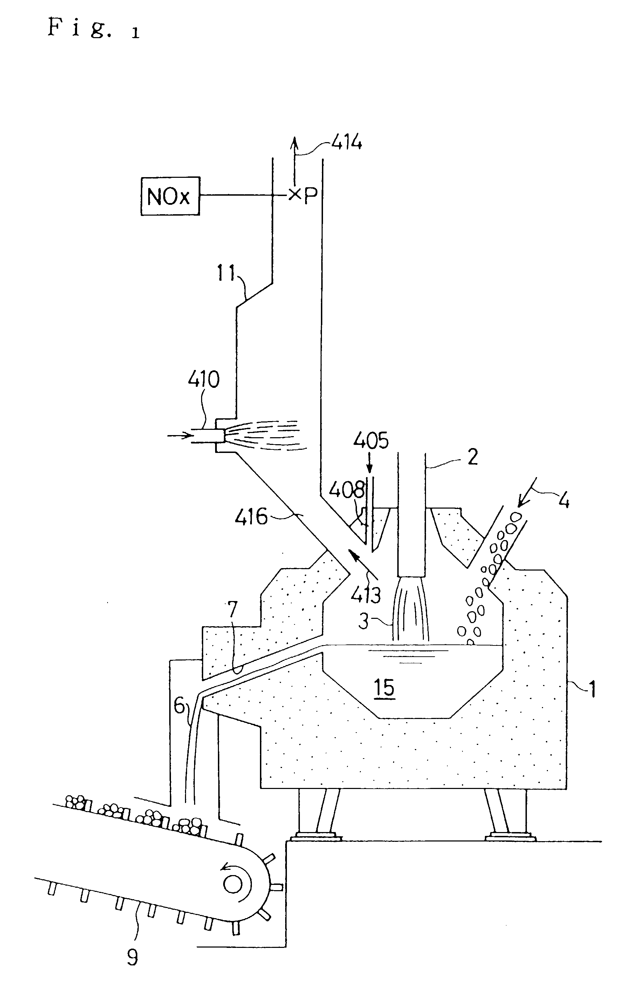

Figs. 1 to 3 illustrate a method of operating the plasma furnace with a view to decreasing the amount of NOₓ.

Referring now to Fig. 1, waste gas 413 which has just been discharged from the furnace body 1 is converted into purified waste gas 414 during and after passage through a waste gas outlet 416. The purified waste gas 414 is discharged into the open air after passage through the flue 11 and a dust catcher (not shown). A fuel inlet 408 is provided at the entrance to the waste gas outlet 416. A requirement to be met by fuel for use in this embodiment is that the fuel should be capable of being injected. Thus, gaseous fuel (such as city gas or butane) or liquid fuel (such as kerosene or fuel oil A) may be used as fuel 405 for decreasing the amount of NO_{x.} The fuel 405 is injected against the waste gas 413 through the fuel inlet 408, uniformly mixed with the waste gas 413, and subjected to combustion. A major portion of the waste gas 413 is converted into reducing gas by which NOₓ is reduced. In view of the fact that the reducing gas may possibly still remain in the waste gas 413 passing through the waste gas outlet 416, an air nozzle 410 having an opening in the flue 11 is provided so that a jet of combustion air issuing from the air nozzle 410 may be directed against the waste gas 413 passing through the flue 11 and the reducing gas remaining in the waste gas 413 may be subjected to complete combustion. Purified waste gas 414 is discharged into the open air after passage through the flue 11 and a dust catcher (not shown).

Various types of plasma torches 2 and various kinds of plasma gases such as Ar, N₂ and air are available. Air is widely used, because it is the most inexpensive plasma gas. The trouble is that N₂ and O₂ contained in air act upon each other in a high-temperature plasma arc and produce NOₓ in high concentrations, to which the causes of photochemical smog and acid rain can be attributed. Gaseous or liquid fuel 405, preferably the former, is injected against the waste gas 413 through the fuel inlet 408 and uniformly mixed with the waste gas 413 which contains NOₓ. A major portion of the waste gas 413 is converted into reducing gas and subjected to combustion. NOₓ is reduced by this reducing gas and diminishes in quantity. When air is used as plasma gas, the quantity of air to be injected per unit time is 10 to 30 Nm³/h in case of an output power of 300 kW, and 80 to 120 Nm³/h in case of an output power of 1.5 MW. When a waste 4 does not contain combustibles, the concentration of O₂ in the waste gas 413 is about 21 %. The quantity of gaseous or liquid fuel 405 to be injected per unit time should be determined so that an optimum quantity of reducing gas for decreasing the quantity of NOₓ may be produced. For this reason, in determining the quantity of gaseous or liquid fuel 405 to be injected per unit time, the quantity of the waste gas 413 and the concentration of O₂ therein should be taken into account. When city gas 13A is used, the quantity of this gaseous fuel to be injected per unit time is no more than 1 to 3 Nm³/h in case of an output power of 300 kW, and 8 to 12 Nm³/h in case of an output power of 1.5 MW. In case where the waste 4 contains combustibles, a smaller quantity of city gas will be enough, because in this case a larger quantity of O₂ contained in the air used as plasma gas is consumed than in case where the waste 4 does not contain combustibles. Since there is no possibility that the city gas issuing from the fuel inlet 408 flows backward to the interior of the furnace body 1, there is no possibility either that harmful matter such as CO gets mixed with the waste gas 413 leaking through a gap between the furnace body 1 and the plasma torch 2.

Preferably, the fuel inlet 408 is provided at the entrance to the waste gas outlet 416 as shown in Fig. 1 so that the fuel 405 injected toward the waste gas 413 may get mixed well with the waste gas 413 so as to be suited to the combustion. Alternatively, the fuel inlet 408 may have an opening in the flue 11. The temperature of the waste gas 413 in the vicinity of the downstream end of the fuel inlet 408 has only to be higher than the ignition temperature of the fuel 405 involved. Thus a temperature above 500°C is preferable. In order to obtain an effect of decreasing the quantity of NOₓ without fail, it is most common to supply more fuel 405 than actually required for consuming residual O₂. The surplus fuel 405 produces reducing gases such as CO and H₂, which should be subjected to complete combustion in the flue 11. A jet of combustion air issuing from the air nozzle 410 serves for this purpose. In order that the concentration of CO in the waste gas 414 discharged into the open air may be held down below 100 ppm, the waste gas 413 in the vicinity of the nozzle tip of the air nozzle 410 should be held at a temperature above 800°C.

The ultrahigh-temperature plasma arc 3 is apt to oxidize the electrode disposed in the plasma torch 2. In order to allow the plasma torch 2 to stand long use, the quantity of air injected per unit time is subjected to a periodic change, which causes the arc end of the ultrahigh-temperature plasma arc 3 to move on the electrode surface and thereby causes the electrode wear to be made uniform so as to allow the electrode to stand long use. In order to keep the furnace atmosphere constantly reducing, it is most common to add carbonaceous matter to the waste 4. Since the carbonaceous matter takes the form of amorphous solids, it takes time for them to be melted and gasified into reducing gases. Furthermore, there is a wide difference in the rate of gasification according to the kinds or sizes of the amorphous solids. This is the very reason why a large quantity of carbonaceous matter is required for keeping the furnace atmosphere constantly reducing. The larger the quantity of carbonaceous matter, the longer the response time of the plasma furnace to a necessity for decreasing the quantity of NOₓ. The present invention solves this problem in a simple and efficient manner by using gaseous fuel 405 such as city gas containing reducing gases. Thus the fuel 405 used in the present invention has a significantly great effect of reducing NOₓ and decreasing the quantity thereof as soon as a small quantity of the fuel 405 is injected toward the waste gas 413. Furthermore, the fuel 405 used in the present invention is convenient to handle such that the quantity of the fuel 405 injected per unit time can be varied with a periodic change in the quantity of plasma gas injected per unit time so that the quantity of reducing gases produced may be suited for holding down the quantity of NOₓ produced.

The following specific example will serve to illustrate the above-described embodiment. The incineration residue of municipal refuse was fed to the plasma furnace shown in Fig. 1 at the rate of 250 kg per hour. The output power used for melting the incineration residue by means of the plasma torch 2 of nontransfer type was 300 kW. Air was used as plasma gas, and the quantity of air injected per unit time was 21 Nm³/h on an average, from which the quantity of air did not vary more than plus or minus 20 % all through the periodic change.

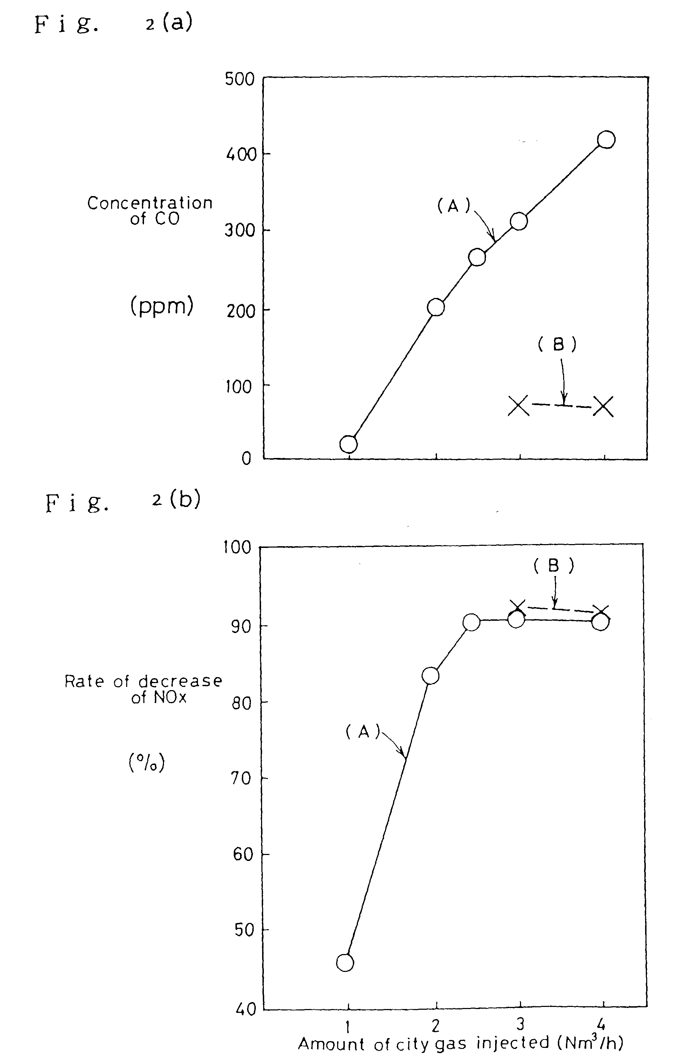

Fig. 2(a) illustrates the relationship between the amount of fuel injected toward the waste gas and the concentration of CO resulting therefrom. Fig. 2(b) illustrates the relationship between the amount of fuel injected toward the waste gas and the rate of decrease of NOₓ. City gas 13A (consisting of 88% methane, 6% ethane, 4% propane and 2% butane) was used as the fuel 405, which was injected toward the waste gas 413 through the fuel inlet 408. When the city gas was injected at the rate of 1 Nm³/h, the concentration of CO in the waste gas 413 was below 100 ppm and the rate of decrease of NOₓ was about 46 %. When the amount of city gas injected per unit time was increased from 2 Nm³/h to 4 Nm³/h, an increase in the concentration of CO was observed as indicated by a curve (A) in Fig. 2(a) and the rate of decrease of NOₓ also came up to about 90 %. In order to decrease the concentration of CO, the open air was drawn into the flue 11, and yet the concentration of CO was rather high. Therefore, a jet of combustion air issuing from the air nozzle 410 was directed at the rate of 20 to 30 Nm³/h against the waste gas 413 passing through the flue 11. The result was that the concentration of CO in the waste gas 414 discharged into the open air was lower than 100 ppm as illustrated by the dashed line (B) in Fig. 2(a), while the rate of decrease of NOₓ, i.e. 90 to 92 %, remained substantially unchanged as shown by the dashed line (B) in Fig. 2(b).

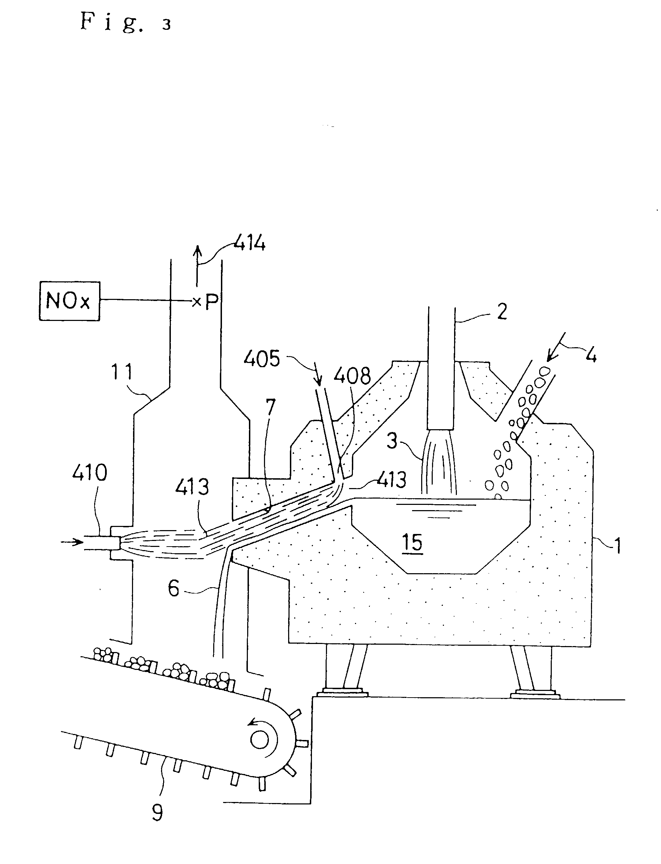

The furnace body 1 shown in Fig. 3 is different in construction from that shown in Fig. 1. The point of difference resides in the fact that, in case of the embodiment shown in Fig. 3, the slag outlet 7 also serves as an outlet for discharging the waste gas 413. The fuel inlet 408 for injecting the fuel 405 is provided at the entrance to the slag outlet 7. In the same manner as mentioned in reference to the embodiment shown in Fig. 1, a major portion of the waste gas 413 is converted into reducing gas by which the amount of NOₓ is decreased. At the same time, the high-temperature waste gas 413 is allowed to heat the slag 6 in the slag outlet 7 so that the discharge of the molten slag 6 may be stabilized.

Ordinarily, the amount of waste gas discharged from the plasma furnace is less than one-thirtieth of the amount of waste gas discharged from a combustion furnace. Such a small amount of waste gas makes it difficult to keep the downstream end of the slag outlet 7 of the plasma furnace and its vicinity at a high temperature. Consequently, the molten slag 6 is apt to be solidified at the downstream end of the slag outlet 7 and hindered from flowing out. If this happens, the furnace pressure will increase to such an uncontrollable extent that the particles of soot suspended in the furnace body 1 will be discharged into the open air and bring about environmental pollution. The present invention solves this problem by injecting the fuel 405 through the fuel inlet 408 and allowing the fuel 405 to be mixed well with the waste gas 403 in the confined space of the slag outlet 7 and subjected to combustion. An intense heat generated thereby serves to keep the whole reach of the slag outlet 7 at a high temperature. The downstream end of the slag outlet 7 and its vicinity are also held at a high temperature, and the slag outlet 7 is prevented from being choked up. The location of the fuel inlet 408 at the entrance to the slag outlet 7 also serves to keep the whole reach of the slag outlet 7 at a high temperature.

The following specific example will serve to illustrate the above-described embodiment. The incineration residue of municipal refuse was fed to the plasma furnace shown in Fig. 3 at the rate of 300 kg an hour. The output power used for melting the incineration residue by means of the plasma torch 2 of nontransfer type was 300 kW. The quantity of plasma gas injected per unit time was subjected to a periodic change with a period of 3 minutes and within the range between 15 Nm³/h and 25 Nm³/h. Combustion air was injected through the air nozzle 410 at the rate of 20 Nm³/h for the purpose of burning the unburnt gas in the flue 11 and thereby inhibiting CO from being discharged into the open air. The aforesaid city gas 13A was injected through the fuel inlet 408 at the rate of 3.0 Nm³/h, and a mean value of 93.7 % was obtained from the rates of decrease of NOₓ obtained in the course of an hour. From the foregoing, it will be noted that the city gas was injected at the constant rate while the quantity of plasma gas injected per unit time was subjected to a periodic change. The result was that the percent reduction and the rate of decrease of NOₓ were subject to sharp variation with time such that they were low when the quantity of plasma gas injected per unit time was large while they were high wnen the quantity of plasma gas injected per unit time was small. In order to cope with this sharp variation, the quantity of city gas injected per unit time through the fuel inlet 408 was also subjected to a periodic change such that the mean value of the quantities of city gas injected per unit time in the course of an hour was 3.0 Nm³/h. The periodic change of the quantity of city gas was synchronized with the periodic change of the quantity of plasma gas, and a mean value of 96.4 % was obtained from the rates of decrease of NOₓ obtained in the course of an hour. In a control test conducted under the condition that the city gas was not injected into the slag outlet 7, the molten slag 6 was solidified at the downstream end of the slag outlet 7 and maintenance work had to be done at intervals of about 5 hours. When the city gas was injected into the slag outlet 7, the aforesaid problem was solved and the necessity for maintenance work was obviated. Because of the stabilized discharge of the high-temperature molten slag 6, the quality of the slag 6 was improved to such a significant degree as to be suited for use, e.g., as aggregate to be mixed with concrete.

In brief, an important feature of the aforesaid two embodiments is that the fuel is injected against the waste gas and converted into reducing gases so that NOₓ contained in the waste gas may be reduced thereby. Thus, the fuel is so effectively utilized for reduction that a small quantity of the fuel is enough to decrease the quantity of NOₓ. Gaseous or liquid fuel, which is capable of being injected, is more convenient to handle than solid fuel. The periodic change of the quantity of fuel can be synchronized with the periodic change of the quantity of plasma gas so that reducing gases may be produced neither too much nor too less. Since the interior of the furnace body is not filled with reducing gases, there is little possibility that the waste gas leaking out of the furnace body contains harmful matter. In one of the aforesaid two embodiments, the fuel is injected into, and subjected to combustion in, the slag outlet which also serves as an outlet for discharging the waste gas. The slag outlet heated thereby serves to stabilize the discharge of the molten slag.

The present invention is industrially usable by providing a means for fuel injection against the waste gas in the furnace body 1, such arrangement being particularly suitable for decreasing the amount of NOₓ.

## Claims

1. A method of operating a plasma furnace (1), comprising the steps of:
melting waste (4) into molten slag (6) with a plasma arc (3) so as to form a molten slag reservoir (15) in a furnace body (1) of said plasma furnace (1); and
discharging waste gas (413) through a waste gas outlet (416) provided in said furnace body (1);
**characterized by the step of**
injecting fuel (405) against said waste gas (413) for decreasing the amount of NOₓ.

2. A method according to claim 1, characterized in that said fuel (405) is injected against said waste gas (413) when said waste gas (413) is flowing into said waste gas outlet (416).

3. A method according to claim 1, characterized in that said waste gas (413) has a temperature above 500°C in a portion where said fuel (405) is injected.

4. A method according to claim 1,
**characterized in that**
plasma gas is injected through a plasma gas inlet provided in a plasma torch (2) mounted on said furnace body (1), said fuel (405) being injected in such a manner that a quantity of said injected fuel is varied with a change in a quantity of said injected plasma gas.

5. A method according to claim 1 or 2, characterized by further injecting fuel against said waste gas (414) when said waste gas (413) has been discharged from said waste gas outlet (416).

6. A method according to claim 5, characterized in that said waste gas (414) discharged from said waste gas outlet (416) has a temperature above 800°C in a portion where said fuel is further injected.

## Patentansprüche

1. Verfahren zum Betreiben eines Plasmaofens (1) mit den folgenden Schritten:
Schmelzen von Abfall (4) zu einer geschmolzenen Schlacke (6) mit einem Plasmabogen (3), um so einen Vorrat (15) an geschmolzener Schlacke in einem Ofenkörper (1) des Plasmaofens (1) zu bilden; und
Abgeben von Abgas (413) durch einen Abgasauslaß (416), der in dem Ofenkörper (1) vorgesehen ist;
**gekennzeichnet durch den Schritt**
Einspritzen von Brennstoff (405) gegen das Abgas (413), um die Menge an NOₓ zu senken.

2. Verfahren nach Anspruch 1,
**dadurch gekennzeichnet, daß**
der Brennstoff (405) gegen das Abgas (413) eingespritzt wird, wenn das Abgas (413) in den Abgasauslaß (416) strömt.

3. Verfahren nach Anspruch 1,
**dadurch gekennzeichnet, daß**
das Abgas (413) eine Temperatur von über 500°C in einem Abschnitt hat, in dem der Brennstoff (405) eingespritzt wird.

4. Verfahren nach Anspruch 1,
**dadurch gekennzeichnet, daß**
ein Plasmagas durch einen Plasmagaseinlaß eingespritzt wird, der in einem Plasmabrenner (2) vorgesehen ist, der an dem Ofenkörper (1) montiert ist, wobei der Brennstoff (405) in einer derartigen Weise eingespritzt wird, daß sich eine Menge des eingespritzten Brennstoffes mit einer Änderung einer Menge des eingespritzten Plasmagases ändert.

5. Verfahren nach Anspruch 1 oder 2,
**dadurch gekennzeichnet, daß**
des weiteren ein Brennstoff gegen das Abgas (414) eingespritzt wird, wenn das Abgas (413) aus dem Abgasauslaß (416) abgegeben wird.

6. Verfahren nach Anspruch 5,
**dadurch gekennzeichnet, daß**
das von dem Abgasauslaß (416) abgegebene Abgas (414) eine Temperatur von über 800°C in einem Abschnitt hat, in dem der Brennstoff des weiteren eingespritzt wird.

## Revendications

1. Une méthode d'exploitation d'un four à plasma (1) comprenant les étapes consistant à :
fondre les déchets (4) en scories fondues (6) avec un arc de plasma (3) de façon à former un réservoir de scories fondues (15) dans un creuset de four (1) dudit four à plasma (1) ; et
libérer les gaz de combustion (413) par un orifice de sortie des gaz de combustion (416) prévu dans ledit creuset du four (1) ;
caractérisée par les étapes consistant à
injecter du combustible (405) contre lesdits gaz de combustion (413) pour diminuer la quantité de NOₓ.

2. Une méthode selon la revendication 1, caractérisée en ce que ledit combustible (405) est injecté contre lesdits gaz de combustion (413) lorsque lesdits gaz de combustion (413) s'écoulent vers ledit orifice de sortie des gaz de combustion (416).

3. Une méthode selon la revendication 1, caractérisée en ce que lesdits gaz de combustion (413) présentent une température supérieure à 500 °C dans une zone dans laquelle ledit combustible (405) est injecté.

4. Une méthode selon la revendication 1,
caractérisée en ce que
du gaz de plasma est injecté par un orifice d'admission du gaz de plasma pratiqué dans une torche à plasma (2) montée sur ledit creuset du four (1), ledit combustible (405) étant injecté d'une façon telle qu'une quantité du dit combustible injecté est modifiée en fonction d'une modification d'une quantité du dit gaz de plasma injecté.

5. Une méthode selon la revendication 1 ou 2, caractérisée en outre par une injection de combustible contre lesdits gaz de combustion (414) lorsque lesdits gaz de combustion (414) ont été libérés depuis ledit orifice de sortie des gaz de combustion (416).

6. Une méthode selon la revendication 5, caractérisée en ce que lesdits gaz de combustion (414) libérés depuis ledit orifice de sortie des gaz de combustion (416) présentent une température supérieure à 800 °C dans une zone dans laquelle ledit combustible est en outre injecté.
